# EUROPÄISCHE PATENTANMELDUNG

(11) **EP 0 556 456 A1**
(43) Veröffentlichungstag der Anmeldung: **25.08.1993**
(21) Anmeldenummer: 92119924.6
(22) Anmeldetag: 23.11.1992
(51) Int. Cl.: C23D 5/02, C23D 5/00, C03C 8/16

(54) **Verfahren zur Herstellung von emaillierten Werkstücken**

(30) Priorität: 18.02.1992 IT MI920350
(71) Anmelder: BAYER AG, 51368 Leverkusen (DE)
(72) Erfinder: Gruber, Hermann, Dr., W-5090 Leverkusen (DE); Arning, Eberhard, D.I., W-4044 Kaarst (DE); Hoffmann, Hans, Dr., B-8000 Brugge (BE); Viquesnel, Alain, F-78350 Iouy en Iosas (FR); Zybell, Paul, Dr., I-24050 Zanica BG (IT); Margotte, Dieter, Dr., W-4150 Krefeld (DE); Foster, Keith, Dr., W-4150 Krefeld (DE)

(57) **Zusammenfassung**

Die Erfindung betrifft ein Verfahren zur Herstellung von mit zwei Schichten emaillierten Werkstücken aus Metallblech, wobei das Blech vor der Verformung mit mindestens einer Email-Polymersuspension beschichtet und getrocknet wird, anschließend das so behandelte Blech verformt wird, gegebenenfalls das so verformte Blech mit einem weiteren Email beschichtet wird, und das so erhaltene Werkstück dann je nach eingesetztem, Metall bei Temperaturen zwischen 560 und 850°C gebrannt wird.

## Beschreibung

Die vorliegende Erfindung betrifft ein verbessertes Verfahren zur Herstellung von emaillierten Werkstücken.

Es ist allgemein bekannt, wie normalerweise Stahlbleche emailliert werden:
a) Zuschneiden der meist beölten, in Sonderfällen auch trockenen Bleche
b) Verformung der Bleche, gegebenenfalls nach Auftrag von Ziehhilfsmitteln, zu Werkstücken durch z.B. Tiefziehen
c) chemische Vorbehandlung der Werkstücke, wie z.B. Entfetten, Beizen, Vernickeln und/oder Passivieren
d) Auftrag der Emailfritte nach bekannten Verfahren, wie z.B. elektrostatischer Pulverauftrag (hierbei kann teilweise Schritt c) entfallen) oder Schlickerauftrag
e) Trocknung (im Falle des Naßauftrages)
f) Einbrand

Eine besondere Technik des Emaillierens besteht darin, das Email zunächst in einer doppelseitigen Grundschicht (Trocknung/Einbrand), dann in einer ein- oder doppelseitigen Deckschicht (Trocknung/Einbrand) auf ein dünnes Stahlband (0,3 - 0,4 mm) aufzubringen. Das fertig emaillierte "Halbzeug" kann dann entsprechend zugeschnitten und zu "Sandwichelementen" (Trägermaterialien: Gipsplatten, Holzfaserplatten, PU-Schäume usw.) verklebt werden. Ein scharfes Abkanten des emaillierten Bandes oder gar ein Tiefziehen ist aufgrund des glasigen Zustands der Oberfläche allerdings nicht möglich. Bezüglich Vorbehandlung und Gleichmäßigkeit des Auftrags auf ein unverformtes Blech ergeben sich große Vorteile gegenüber der üblichen Technik der Behandlung bereits verformter Teile. Eine derartige Verformung von Werkstücken nach der Beschichtung mit Email ist jedoch aufgrund der Sprödigkeit der Emailschicht nicht möglich oder nur bedingt möglich.

In der US Patentschrift 3 154 426 wird ein Verfahren zum Emaillieren von Metallgegenständen beschrieben. Zuerst wird eine Emailschicht auf das vorbehandelte Metall aufgebracht und getrocknet, danach wird ein organisches Kunststoffmaterial aufgebracht und anschließend gebrannt. Der Nachteil dieses Verfahrens ist, daß bei hellen Emaillierungen die Metallbleche zur Erzielung einer guten Haftung intensiv gebeizt und vernickelt werden müssen. Dieses könnte auf chemischem oder elektrolytischem Weg kontinuierlich am Coil durchgeführt werden, was jedoch aufwendige technische Anlagen erfordert.

Um das aufwendige Procedere des in der US-P 3 154 426 beschriebenen Verfahrens der Vorbehandlung zu umgehen, wurden in der US-Patentschrift 3 906 125 die Stahlbleche durch verschiedene Glühprozesse vorbehandelt. Doch auch diese Vorgehensweise ist noch sehr aufwendig und kompliziert und konnte sich deshalb in der Praxis nicht durchsetzen.

Aufgabe war es daher, ein verbessertes Verfahren zur Emaillierung von Werkstücken zur Verfügung zu stellen, das es gestattet, gegebenenfalls ohne Vorbehandlung des Metalles, zu emaillieren und das es gleichzeitig gestattet, die Verformung des Bleches ohne Nachteile durchzuführen.

Diese Aufgabe konnte durch das erfindungsgemäße Verfahren gelöst werden.

Gegenstand der Erfindung ist ein Verfahren zur Herstellung von mit zwei Schichten emaillierten Werkstücken aus Metallblech, welches dadurch gekennzeichnet ist, daß das Blech vor der Verformung mit mindestens einer Email-Polymersuspension beschichtet und danach getrocknet wird, anschließend das so behandelte Blech verformt wird, gegebenenfalls das so verformte Blech mit einer weiteren Emailfritte beschichtet wird, und das so erhaltene Werkstück dann je nach eingesetztem Metall bei Temperaturen von 560 bis 850°C gebrannt wird.

Bevorzugt wird das Verfahren so durchgeführt, daß zwei Email-Polymersuspensionen nacheinander auf das Blech vor der Verformung aufgebracht werden.

In einer bevorzugten Variante des erfindungsgemäßen Verfahrens wird eine Email-Polymersuspension vor der Verformung des Bleches aufgetragen und ein Email (z.B. als Emailschlicker oder -pulver) nach der Verformung aufgebracht.

Vorzugsweise wird im erfindungsgemäßen Verfahren als Polymer ein Gemisch aus Bindemittel, Lösungsmittel und Suspendierhilfsmittel sowie gegebenenfalls anderen Zusatzmitteln eingesetzt.

Als Bindemittel werden bevorzugt Hydroxylgruppen-haltige, Stickstoff- und Halogen-freie Polymerisate und/oder Polykondensate eingesetzt, die unter den Einbrenn-/Schmelztemperaturen rückstandslos verbrennen.

Vorzugsweise liegt der Gehalt an Hydroxylgruppen im Bindemittel zwischen 0,5 und 10 %.

Insbesondere werden Polyhydroxylpolyacrylate eingesetzt, die bevorzugt einen Hydroxylgruppengehalt von 0,5 bis 10 Gew.-% aufweisen.

Besonders bevorzugt sind Abmischungen derartiger Polyhydroxypolyacrylate mit Polyhydroxypolyestern, die bevorzugt einen Hydroxylgruppengehalt von 0,5 bis 10 Gew.-% aufweisen. Die Abmischungen werden insbesondere in einem Gewichtsverhältnis von Polyhydroxypolyacrylaten zu Polyhydroxylpolyestern wie 9:1 bis 1:9, vorzugsweise 9:1 bis 6:4 hergestellt.

Die Lösungsviskositäten von 50 Gew.-%igen Lösungen der Polyacrylatharze in Xylol/Methoxypropylacetat (Gewichtsverhältnis 1:1) liegen bei 23°C im allgemeinen bei 2 000 bis 30 000, vorzugsweise bei 3 000 bis 10 000 mPas.

Als Bindemittel werden ganz besonders bevorzugt Mischungen aus säuregruppenhaltigen- und epoxigruppenhaltigen, stickstoff- und halogen-freien Polymerisaten eingesetzt, die unter den Einbrenn-/Schmelztemperaturen rückstandslos verbrennen. Die Polymerisate vernetzen während des Trocknungsvorgangs durch die Reaktion der Säuregruppen des einen Polymerisats mit den Epoxigruppen des anderen Polymerisats bevorzugt bei erhöhter Temperatur (> 50°C).

Vorzugsweise liegt der Gehalt an Säuregruppen im Polymerisat zwischen 0,5 und 30 % und der Gehalt an Epoxigruppen im Polymerisat zwischen 0,5 und 30 %.

Insbesondere werden Polyacrylate mit mehr als einer Säure- bzw. Epoxigruppe pro durchschnittlicher Moleküleinheit eingesetzt, die bevorzugt einen Säure- bzw. Epoxigehalt von 0,5 bis 30 Gew.-% aufweisen.

Besonders bevorzugt sind Abmischungen von säuregruppenhaltigen Polyacrylaten, die einen Säuregehalt von 1 bis 20 Gew.-% aufweisen, mit epoxigruppenhaltigen Polyacrylaten, die einen Epoxigehalt von 1 bis 15 Gew.-% aufweisen. Die Abmischungen werden insbesondere in stöchiometrischen Verhältnissen von Säuregruppen zu Epoxigruppen wie 99:1 bis 1:99, vorzugsweise 9:1 bis 1:9, besonders bevorzugt 1:2 bis 2:1 eingesetzt.

Die Lösungsviskositäten von 50 gew.-%igen Lösungen der Polyacrylatharze in einem hochsiedenden aromatischen Kohlenwasserstoff-Gemisch wie z.B. Solvesso 150^{®} der Fa. Exxon Chemical International, Inc. oder Cyclohexanon oder einer Mischung der beiden Lösungsmittel liegen im Falle des säuregruppenhaltigen Polyacrylats bei 23°C im allgemeinen bei 2.000 bis 30.000, vorzugsweie bei 3.000 bis 10.000 mPa·sec. Im Falle des epoxigruppenhaltigen Polyacrylats liegen die Lösungsviskositäten von 50 gew.-%igen Lösungen der Polyacrylatharze im Solvesso 150^{®}, Cyclohexanon oder deren Mischungen bei 23°C im allgemeinen bei 80 bis 1.000, vorzugsweise bei 100 bis 300 mPa·sec.

Die Herstellung der Polyacrylatharze erfolgt nach dem bekannten kontinuierlichen Polymerisationsverfahren oder insbesondere nach dem bekannten Zulaufpolymerisationsverfahren, wie es beispielsweise im US-Patent 4 442 145 beschrieben ist.

Auch bezüglich der einzusetzenden, olefinisch ungesättigten Monomeren, der einzusetzenden Initiatoren, Lösungsmittel und sonstigen Hilfsmittel sei auf die oben genannte Veröffentlichung verwiesen.

Bei den Polyestern handelt es sich um an sich bekannte Polyesterpolyole z.B. auf Basis von (i) aliphatischen, aromatischen oder cycloaliphatischen Dicarbonsäuren bzw. Anhydriden derartiger Säuren und (ii) mehrwertigen aliphatischen Alkoholen.

Geeignete Dicarbonsäuren sind beispielsweise solche des Molekulargewichtsbereichs 146 bis 250 wie Adipinsäure, Phthalsäure, Tetrahydrophthalsäure oder Hexahydrophthalsäure bzw. Gemische derartiger Säuren. Anstelle der beispielhaft letztgenannten drei Säuren werden vorzugsweise deren Anhydride eingesetzt.

Geeignete mehrwertige Alkohole sind insbesondere solche des Molekulargewichtsbereichs 62 bis 150 wie Ethylenglykol, Propylenglykol, 1,4-Butandiol, 1,6-Hexandiol, Glycerin, Trimethylolpropan oder Gemische derartiger mehrwertiger Alkohole.

Die Herstellung der Polyesterpolyole erfolgt nach an sich bekannten Methoden unter Verwendung eines, den gemachten Angaben bezüglich des Hydroxylgruppengehaltes entsprechenden, Überschusses an mehrwertigem Alkohol.

Die Herstellung der auftragsfertigen Suspensionen erfolgt im allgemeinen so, daß in das Bindemittel unter Verwendung von z.B. Methoxypropylacetat oder Butylacetat als Lösungsmittel das feingemahlene Emailpulver, ein Suspendierhilfsmittel wie z.B. Magnesiumsilikathydrat sowie Benetzungs- und Entschäumungsmittel und weitere Zusatzmittel langsam eingerührt werden. Je nach gewünschter Auftragsstärke der Schichten und angewendeter Auftragsverfahren werden unterschiedliche Viskositäten eingestellt (Auslaufzeiten nach DIN 53211 (aus Becher mit 4 mm Durchmesser) zwischen 20 und 100 Sekunden).

Die Herstellung der auftragsfertigen Suspensionen erfolgt bevorzugt so, daß das säuregruppenhaltige Polyacrylatharz in einem Lösungsmittel gegebenenfalls auf ca. 65°C vorgeheizt wird. Dazu wird langsam ein Suspendierhilfsmittel unter Rühren (z.B. M-P-A 60 X^{®} der Fa. NL Industries, Inc.), welches gegebenenfalls auch auf ca. 65°C vorgeheizt wird, zugegeben und dispergiert. Das feingemahlene Emailpulver wird unter gleichzeitiger Verwendung von hochsiedenden Lösungsmitteln wie z.B. Solvesso 150^{®}, Cyclohexanon, Glykoletherestern und dergleichen sowie Benetzungs- und Entlüftungsmitteln und weiteren Zusatzmitteln in die mit dem o.g. Suspendierhilfsmittel modifizierte Bindemittellösung gegeben und z.B. unter Zuhilfenahme von Kugel-, Perl-oder Sandmühlen angerieben bis eine für diesen Zweck gute Emailteilchenverteilung erreicht wird. Nach der Trennung der Mahlpaste vom Mahlgut (Kugeln, Perlen oder Sand) wird zur gekühlten Mahlpaste die vorgesehene Menge des epoxigruppenhaltigen Polyacrylates zugegeben. Je nach gewünschter Auftragsstärke der Schichten und angewendeter Auftragsverfahren werden unterschiedliche Viskositäten durch weitere Zugabe der o.g. Lösungsmittel eingestellt (Auslaufzeiten nach DIN 53 211 (aus Becher mit 4 mm Durchmesser) zwischen 40 und 200 Sekunden).

Der Auftrag der Email-Polymersuspensionen erfolgt vorzugsweise im "roll-coater"-Verfahren. In den Fällen, in denen eine Schicht vor der Verformung als Email-Polymersuspension und eine weitere Emailschicht nach der Verformung in an sich bekannter Weise aufgebracht wird, können für die weitere Schicht sämtliche üblichen Emailauftragsverfahren eingesetzt werden.

Die Email-Polymersuspensionen können in einer bevorzugten Ausführungsform auch im Siebdruckverfahren aufgebracht werden.

Aus Gründen einer schnellen Aushärtung ist ein UV-härtendes Medium als Bindemittel besonders vorteilhaft.

Die Email-Polymersuspensionen können in einer weiteren Ausführungsform im Gießschleierverfahren aufgebracht werden.

In einer bevorzugten Verfahrensvariante werden eine oder mehrere Email-Polymersuspensionen nacheinander kontinuierlich auf Coils aufgebracht.

Die Email-Polymersuspensionen können auch bevorzugt nacheinander auf plane Zuschnitte (Platinen) aufgetragen werden.

Vorzugsweise erfolgt der Einbrand in einem kontinuierlichen Brennofen, wobei das Polymer bzw. Polymergemisch in der Vorheizzone bei Temperaturen von 200 bis 500°C rückstandsfrei ausgetrieben wird und die dabei entweichenden Abgase einer Abgasreinigung zugeführt werden.

Die im erfindungsgemäßen Verfahren eingesetzten Emails haben üblicherweise folgende Zusammensetzung: Email für die erste Schicht auf dem Metall:

| | |
|---|---|
| SiO₂ | 40-51 Gew.-% |
| Al₂O₃ | 1- 5 Gew.-% |
| B₂O₃ | 11-18 Gew.-% |
| K₂O | 0- 5 Gew.-% |
| CaO | 2-13 Gew.-% |
| Na₂O | 7-15 Gew.-% |
| Li₂O | 0- 6 Gew.-% |
| BaO | 0-15 Gew.-% |
| ZrO₂ | 0- 6 Gew.-% |
| CoO | 0,5-1,5 Gew.-% |
| MnO | 0- 2 Gew.-% |
| CuO | 0- 3 Gew.-% |
| NiO | 1- 4 Gew.-% |
| P₂O₅ | 0- 3 Gew.-% |
| F₂ | 0- 5 Gew.-% |

Email für die zweite Schicht:

| | |
|---|---|
| SiO₂ | 35-45 Gew.-% |
| Al₂O₃ | 0- 4 Gew.-% |
| B₂O₃ | 14-20 Gew.-% |
| Na₂O | 7-11 Gew.-% |
| K₂O | 2- 9 Gew.-% |
| Li₂O | 0- 2 Gew.-% |
| TiO₂ | 13-22 Gew.-% |
| MgO | 0- 2 Gew.-% |
| P₂O₅ | 0- 4 Gew.-% |
| ZnO | 0- 2 Gew.-% |
| F₂ | 0- 5 Gew.-% |

Beim erfindungsgemäßen Verfahren braucht das Metallblech nicht vorbehandelt bzw. lediglich entfettet zu werden. Damit fällt die aufwendige und ökologisch bedenkliche Vorbehandlung mit sauren Lösungen weg. Des weiteren kann das Metallblech vor der Verformung emailliert werden, ohne daß das emaillierte Werkstück schlechtere Eigenschaften aufweist als das normal erhältliche. Durch den Auftrag des Emails vor der Verformung sind aufwendige Auftragsverfahren auf bereits geformte Werkstücke unnötig geworden.

Die organisch gebundene Grundemailschicht mit bis zu 30 % organischem Anteil kann nach Aushärtung der Schicht ohne Zwischenbrand mit einer ebenfalls organisch gebundenen Deckemailschicht mit bis zu 30 % organischem Anteil überzogen werden und gemeinsam nach Verformung zu einer gut haftenden, fehlerlosen Emaillierung gebrannt werden, wobei die organischen Anteile rückstandsfrei ausgetrieben werden.

In manchen Fällen kann es günstiger sein, nur eine organisch gebundene Grundemailschicht auf den Blechzuschnitt aufzubringen, anschließend zu verformen und schließlich mit üblichen Auftragsverfahren - z.B. elektostatischem Pulverauftrag - den Deckauftrag vorzunehmen. Der Einbrand erfolgt dann bei der dem eingesetzten Email entsprechenden Temperatur z.B. bei 820°C.

In einer speziellen Ausführungsform kann die Grundemail-Polymersuspension auch im Siebdruckverfahren auf eine Platine aufgebracht werden, wobei ein UV-trocknendes Medium besondere Vorteile hinsichtlich einer kurzen Trocknungszeit und damit hoher Produktionsgeschwindigkeit bringen kann. Die letztgenannte Version kann auch für einen Auftrag am Coil vorteilhaft sein.

Das erfindungsgemäße Verfahren wird bevorzugt so durchgeführt, daß z.B. ein nicht vorbehandeltes oder nur entfettetes Stahlblech z.B. im roll-coater-Verfahren mit einer Email-Polymersuspension (bildet die Grundemailschicht) beschichtet wird, kurz (0,5-2 Min. bei T = 20-180°C) getrocknet wird und dann mit einer weiteren Email-Polymersuspension (bildet die Deckemailschicht) beschichtet und kurz getrocknet wird. In diesem Zustand ist das Stahlblech - als Coil oder Platine - transport- und lagerfähig. Danach können die entsprechend behandelten Zuschnitte zu den gewünschten Werkstücken verformt und dem Brennprozeß z.B. in einem kontinuierlichen Brennofen zugeführt werden.

Der Auftrag der Email-Polymersuspensionen auf Coil oder Platinen kann in an sich bekannter Weise im roll-coater-Verfahren, im Gießschleierverfahren, im Spritzverfahren oder mit Siebdruck vorgenommen werden.

Die Erfindung soll anhand der nachfolgenden Beispiele näher erläutert werden.

### Beispiel 1

Ein Grundemail der Zusammensetzung

| | |
|---|---|
| SiO₂ | 44,8 Gew.-% |
| Al₂O₃ | 3,8 Gew.-% |
| B₂O₃ | 16,5 Gew.-% |
| CaO | 11,8 Gew.-% |
| Na₂O | 14,1 Gew.-% |
| K₂O | 0,1 Gew.-% |
| CoO | 0,5 Gew.-% |
| CuO | 0,2 Gew.-% |
| NiO | 0,9 Gew.-% |
| P₂O₅ | 0,6 Gew.-% |
| MnO | 1,5 Gew.-% |
| F₂ | 5,2 Gew.-% |

wird in einer Kugelmühle trocken ohne weiteren Zusatz so fein vermahlen, daß sich bei der Prüfung (Methode nach Pöschmann; Email und Emailliertechnik, S. 146) mit einem Sieb einer Maschenweite von 40 µm (16.900 Maschen/cm²) eine Mahlfeinheit von 2-3 ergibt.

Das so erhaltene Pulver wird in ein Gemisch enthaltend ein Bindemittel aus
- A: 15,8 Gew.-% Hydroxyethylmethacrylat
68,0 Gew.-% Methylmethacrylat
13,8 Gew.-% 2-Ethylhexylacrylat
1,0 Gew.-% Acrylsäure
1,4 Gew.-% Katalysator (Di-t-butylperoxid)
und
- B: 22,2 Gew.-% Trimethylolpropan 3,2 Gew.-% Phthalsäureanhydrid
60,7 Gew.-% Adipinsäure
31,9 Gew.-% 1,2-Propylenglykol
-18,0 Gew.-% Wasser
im Mischungsverhältnis von A:B wie 80:20

sowie Methoxypropylacetat Lösungsmittel, ein Suspendierhilfsmittel Bentone 34^{®} der Fa. NL Industries, Inc. sowie als Benetzungsmittel EFKA66^{®} und als Entschäumungsmittel EFKA21^{®} der Fa. Efka Chem. B.V. langsam so eingerührt (Rührdauer etwa 10 Min.), daß ein Mischungsverhältnis von
17,1 Gew.-% Bindemittel
16,1 Gew.-% Methoxypropylacetat
1,0 Gew.-% Bentone 34^{®}
63,3 Gew.-% Grundemailpulver
1,5 Gew.-% EFKA 66^{®}
1,0 Gew.-% EFKA 21^{®}
entsteht.

Die so erhaltene Suspension hat - gemessen nach DIN 53 211 - eine Auslaufzeit von ca. 80 Sekunden und kann im roll-coater-Verfahren auf entfettete, entkohlte Stahlbleche (C < 0,005 %) aufgebracht werden. Bei der angegebenen Viskosität entsteht ein Emailauftrag von 100 g/m². Nach einer Trocknung von etwa 1 Min. bei Raumtemperatur kann die in ähnlicher Weise hergestellte Weißemailsuspension auf die Grundschicht aufgebracht und anschließend getrocknet werden.

Zur Herstellung der Weißemailsuspension wird ein Weißemail der Zusammensetzung

| | |
|---|---|
| SiO₂ | 43,9 Gew.-% |
| Al₂O₃ | 0,1 Gew.-% |
| B₂O₃ | 18,0 Gew.-% |
| Na₂O | 7,6 Gew.-% |
| K₂O | 6,6 Gew.-% |
| TiO₂ | 17,2 Gew.-% |
| P₂O₅ | 2,8 Gew.-% |
| ZnO | 1,4 Gew.-% |
| F₂ | 2,4 Gew.-% |

trocken ohne weitere Zusätze vermahlen (Mahlfeinheit 2 auf einem Sieb mit 16.900 Maschen/cm²).

Das so erhaltene Pulver wird wie oben beschrieben so in ein Gemisch aus Bindemittel, Lösungsmittel etc. eingerührt, daß ein Mischungsverhältnis von
17,5 Gew.-% Bindemittel (siehe Bindemittel für Grundemailsuspension)
15,1 Gew.-% Methoxypropylacetat
1,5 Gew.-% Bentone 34^{®}
63,4 Gew.-% Weißemailpulver
1,5 Gew.-% EFKA 66^{®}
1,0 Gew.-% EFKA 21^{®}
entsteht.

Die Auslaufzeit nach DIN 53211 beträgt ca. 80 Sekunden und die Auftragsmenge für die Weißemailschicht 300 g Email/m².

Nach Trocknung der im roll coater-Auftrag aufgebrachten zweiten Schicht wird das Stahlblech durch Tiefziehen verformt und anschließend in einem üblichen, kontinuierlich arbeitenden Ofen eingebrannt. Die Teile werden dabei von einer Förderkette durch den Ofen transportiert, wobei
nach 2 Minuten ca. 200°C
nach 4 Minuten ca. 300°C
nach 5 Minuten ca. 400°C
nach 6 Minuten ca. 600°C
nach 8 Minuten ca. 820°C
erreicht werden. Die Einbrenntemperatur von 820°C wird ca. 3,5 Minuten eingehalten. Nach Durchlaufen der Brennkurve wird die Ware mit ähnlicher Geschwindigkeit abgekühlt, wie sie aufgeheizt worden ist. Die Teile zeigen eine fehlerfreie Weißemaillierung.

Die organischen Komponenten sind innerhalb von 5 Minuten zwischen Raumtemperatur und 400°C abgedampft, werden abgesaugt und einer Nachverbrennung zugeführt.

### Beispiel 2

Das Grundemail (gleiche Zusammensetzung wie in Beispiel 1) wird in gleicher Weise wie in Beispiel 1 vermahlen und in das gleiche Bindemittelgemisch eingerührt und dann auf Stahlblech (Güte ED4 nach DIN 1623/3) aufgetragen und getrocknet. Das Stahlblech wird danach verformt. Das Weißemail (Zusammensetzung wie in Beispiel 1) wird nach der Verformung durch Naßspritzen einer wäßrigen Suspension

| | |
|---|---|
| Weißemail | 100 Gew.-Teile |
| Blauton | 3,0 Gew.-Teile |
| Bentonit | 0,2 Gew.-Teile |
| Natriumaluminat | 0,4 Gew.-Teile |
| Kaliumcarbonat | 0,4 Gew.-Teile |
| Wasser | 45,0 Gew.-Teile |

aufgetragen, getrocknet (3 Min. bei 100°C) und anschließend wie in Beispiel 1 kontinuierlich eingebrannt. Es entsteht eine fehlerfreie Weißemaillierung.

### Beispiel 3

Die Durchführung erfolgt wie in Beispiel 2 mit dem Unterschied, daß das Weißemail (Zusammensetzung wie in Beispiel 2) unter Zusatz von 0,3 Gew.-% Methylhydrogenpolysiloxan in bekannter Weise zu einem elektrostatisch abscheidbarem Pulver vermahlen wird und elektrostatisch auf das verformte, beschichtete Stahlblech (siehe Beispiel 2) aufgetragen wird. Der Einbrand (ohne Zwischentrocknung) erfolgt wie in Beispiel 2. Es entsteht eine fehlerfreie Weißemaillierung.

### Beispiel 4

Es wird das Grundemailpulver wie in Beispiel 1 beschrieben verwendet.

Das so erhaltene Pulver wird mit einem Gemisch enthaltend ein Bindemittel aus
- A: 65,0 Gew.-% 2-Ethylhexylmethacrylat
24,0 Gew.-% 2-Ethylhexylacrylat
9,0 Gew.-% Methacrylsäure
2,0 Gew.-% Katalysator (Di-t-butylperoxid)
und
- B: 53,0 Gew.-% 2-Ethylhexylmethacrylat
18,0 Gew.-% 2-Ethylhexylacrylat
27,0 Gew.-% Glycidylmethacrylat
2,0 Gew.-% Katalysator (Di-t-butylperoxid)
im Mischungsverhältnis von A:B wie 81:69

sowie Solvesso 150^{®} und Cyclohexanon als Lösungsmittel, ein Suspendierhilfsmittel M-P-A 60 X^{®} sowie als Entlüftungsmittel Fluorad FC 430^{®} der Fa. Minnesota Mining Manufacturing, Inc. durch das oben beschriebene Verfahren angerieben (Anreibungsdauer ca. 30 min). Ein Mischungsverhältnis von
14,0 Gew.-% Bindemittel
56,2 Gew.-% Grundemailpulver
5,8 Gew.-% Suspendierhilfsmittel M-P-A 60 X^{®}
0,1 Gew.-% Entlüftungsmittel Fluorad FC 430^{®}
7,0 Gew.-% Cyclohexanon
16,9 Gew.-% Solvesso 150^{®}
entsteht.

Die so erhaltene Suspension hat - gemessen nach DIN 53 211 - eine Auslaufzeit von ca. 96 sec und kann im Roll-Coater-Verfahren (Walzauftrag) auf entfettete, entkohlte Stahlbleche (C < 0,005 Gew.-%) aufgebracht werden. Bei der angegebenen Viskosität entsteht ein Emailauftrag von ca. 100 g/m². Nach einer Trocknung von etwa 30 sec bei 350°C und einer Abkühlung mit Wasser kann der Auftrag und die Trocknung der in ähnlicher Weise hergestellten Weißemailpulversuspension unmittelbar erfolgen.

Für die Herstellung der Weißemailsuspension wird das Weißemailpulver wie in Beispiel 1 beschrieben verwendet.

Das Pulver wird wie oben beschrieben so in ein Gemisch bestehend aus Bindemitteln, Lösungsmitteln, Suspendierhilfsmitteln und Entlüftungsmitteln eingerührt, daß ein Mischungsverhältnis von
14,0 Gew.-% Bindemittel (s. Bindemittel für Grundemailsuspension)
56,2 Gew.-% Weißemailpulver
5,8 Gew.-% Suspendierhilfsmittel M-P-A 60 X^{®}
0,1 Gew.-% Entlüftungsmittel Fluorad FC 430^{®}
7,0 Gew.-% Cyclohexanon
16,9 Gew.-% Solvesso 150^{®}
entsteht.

Die Auslaufzeit nach DIN 53 211 beträgt ca, 92 Sekunden und die Auftragsmenge für die Weißemailschicht ca. 300 g Email/m². Der Auftrag der Suspension erfolgt durch das Roll-Coater-Verfahren auf die Grundemailschicht. Die so aufgebrachte zweite Schicht wird bei ca. 350°C für ca. 30 sec getrocknet und mit Wasser abgekühlt.

Nach Trocknung und Kühlung der zweiten Schicht wird das Stahlblech durch Tiefziehen verformt und anschließend in einem üblichen, kontinuierlich arbeitenden Ofen eingebrannt. Die Teile werden dabei von einer Förderkette durch den Ofen transportiert, wobei
nach 2 Minuten ca. 200°C
nach 4 Minuten ca, 300°C
nach 5 Minuten ca, 400°C
nach 6 Minuten ca, 600°C
nach 8 Minuten ca, 820°C
erreicht werden, Die Einbrenntemperatur von 820°C wird ca, 3,5 Minuten eingehalten. Nach Durchlaufen der Brennkurve wird die Ware mit ähnlicher Geschwindigkeit abgekühlt, wie sie aufgeheizt worden ist. Die Teile zeigen eine fehlerfreie Weißemaillierung.

Die organischen Komponenten sind innerhalb von 5 Minuten zwischen Raumtemperatur und 400°C abgedampft, werden abesaugt und einer Nachverbrennung zugeführt.

## Patentansprüche

1. Verfahren zur Herstellung von mit zwei Schichten emaillierten Werkstücken aus Metallblech, dadurch gekennzeichnet, daß das Blech vor der Verformung mit mindestens einer Email-Polymersuspension beschichtet und getrocknet wird, anschließend das so behandelte Blech verformt wird, gegebenenfalls das so verformte Blech mit einem weiteren Email beschichtet wird, und das so erhaltene Werkstück dann je nach eingesetztem Metall bei Temperaturen zwischen 560 und 850°C gebrannt wird.

2. Verfahren gemäß Anspruch 1, dadurch gekennzeichnet, daß zwei Email-Polymersuspensionen nacheinander auf das Blech vor der Verformung aufgebracht werden.

3. Verfahren gemäß Anspruch 1, dadurch gekennzeichnet, daß eine Email-Polymersuspension vor der Verformung des Bleches aufgetragen und ein Email nach der Verformung aufgebracht wird.

4. Verfahren gemäß einem der Ansprüche 1 bis 3, dadurch gekennzeichnet, daß als Polymer ein Gemisch aus Bindemittel, Lösungsmittel und Suspendierhilfsmittel sowie gegebenenfalls anderen Zusatzmittel eingesetzt wird.

5. Verfahren gemäß Anspruch 4, dadurch gekennzeichnet, daß als Bindemittel Mischungen aus säuregruppenhaltigen-und epoxigruppenhaltigen, stickstoff- und halogen-freien Polymerisaten eingesetzt werden, die unter den Einbrenn-/Schmelztemperaturen rückstandslos verbrennen.

6. Verfahren gemäß Anspruch 5, dadurch gekennzeichnet, daß der Gehalt an Säuregruppen im Polymerisat zwischen 0,5 und 30 % und der Gehalt an Epoxigruppen im Polymerisat zwischen 0,5 und 30 % liegt.

7. Verfahren gemäß Anspruch 5, dadurch gekennzeichnet, daß Polyacrylate mit mehr als einer Säure- bzw. Epoxigruppe pro durchschnittlicher Moleküleinheit eingesetzt werden, die bevorzut einen Säure- bzw. Epoxigehalt von 0,5 bis 30 Gew.-% aufweisen.

8. Verfahren gemäß Anspruch 5, dadurch gekennzeichnet, daß Abmischungen von säuregruppenhaltigen Polyacrylaten, die einen Säuregehalt von 1 bis 20 Gew.-% aufweisen, mit epoxigruppenhaltigen Polyacrylaten, die einen Epoxigehalt von 1 bis 15 Gew.-% aufweisen, als Bindemittel eingesetzt werden, wobei die Abmischungen in stöchiometrischen Verhältnissen von Säuregruppen zu Epoxigruppen wie 99:1 bis 1:99, vorzugsweise 9:1 bis 1:9, besonders bevorzugt 1:2 bis 2:1 vorliegen.

9. Verfahren gemäß Anspruch 4, dadurch gekennzeichnet, daß als Bindemittel Hydroxylgruppen-haltige, Stickstoff-und halogenfreie Polymerisate und/oder Polykondensate eingesetzt werden, die unter den Schmelz- und Einbrenntemperaturen rückstandslos verbrennen.

10. Verfahren gemäß Anspruch 9, dadurch gekennzeichnet, daß der Gehalt an Hydroxylgruppen im Bindemittel zwischen 0,5 und 10 % liegt.

11. Verfahren gemäß Anspruch 4, dadurch gekennzeichnet, daß als Bindemittel ein UV-härtendes Medium eingesetzt wird.

12. Verfahren gemäß einem der Ansprüche 1 bis 11, dadurch gekennzeichnet, daß die Email-Polymersuspensionen im Siebdruckverfahren aufgebracht werden.

13. Verfahren gemäß einem der Ansprüche 1 bis 11, dadurch gekennzeichnet, daß die Email-Polymersuspensionen im Gießschleierverfahren aufgebracht werden.

14. Verfahren gemäß einem der Ansprüche 1 bis 11, dadurch gekennzeichnet, daß die Email-Polymersuspensionen im roll-coater-Verfahren aufgebracht werden.

15. Verfahren gemäß einem der Ansprüche 1 bis 14, dadurch gekennzeichnet, daß die Email-Polymersuspensionen nacheinander kontinuierlich auf Coils aufgebracht werden.

16. Verfahren gemäß einem der Ansprüche 1 bis 14, dadurch gekennzeichnet, daß die Email-Polymersuspensionen nacheinander auf plane Zuschnitte aufgetragen werden.

17. Verfahren gemäß einem der Ansprüche 1 bis 16, dadurch gekennzeichnet, daß der Einbrand in einem kontinuierlichen Brennofen erfolgt, wobei das Polymer in der Vorheizzone bei Temperaturen von 200 bis 500°C rückstandsfrei ausgetrieben wird und die dabei entweichenden Abgase einer Abgasreinigung zugeführt werden.
